# DEMANDE DE BREVET EUROPEEN

(11) **EP 0 789 099 A1**
(43) Date de publication de la demande: **13.08.1997**
(21) Numéro de dépôt: 97830035.8
(22) Date de dépôt: 03.02.1997
(51) Int. Cl.: D03J 1/14

(54) **Procédé et dispositif pour le remettage des fils à travers les dents d'un peigne double dans une machine de rentrage automatique**

(30) Priorité: 09.02.1996 IT FI960021
(71) Demandeur: EL. & M. S.p.A., 50047 Prato (IT)
(72) Inventeur: Gironi, Fabrizio, 50047 Prato (IT)
(74) Mandataire: Martini, Lazzaro

(57) **Abrégé**

Dispositif pour le remettage des fils à travers les dents d'un peigne double (2) avec plusieurs lamelles ou dents (2a, 2b) alignées et disposées sur deux files parallèles et décalées horizontalement entre elles d'une distance (d) correspondante à la moitié du pas (p) du peigne dans une machine de rentrage, avec des moyens pour le mouvement longitudinal dudit peigne (2) et pour le mouvement de la passette (3), lequel comprend: - un index (1) fixé à un chariot de support correspondant (7) de façon à résulter tourné vers les deux files (2a, 2b) d'un peigne double (2) et orthogonal à l'axe de celui-ci: ledit chariot (7) étant à son tour monté sur une glissière linéaire (8) pour permettre le mouvement longitudinal de l'index (1) de et vers le peigne (2); - une plaque horizontale (9) ou est fixée la glissière (8) dudit chariot (7): ladite plaque (9) étant fixée à une plate-forme horizontale (11) faisant fonction aussi d'élément de guide et de support pour une passette (3); - un moteur pas-à-pas (12) pour le mouvement dudit index (1), lequel est supporté par ladite plaque (9) et est relié au chariot (7) de l'index (1) au moyen d'une courroie (10).

## Description

La présente invention à pour objet un procédé et un dispositif pour le remettage des fils à travers les dents d'un peigne double dans une machine de rentrage automatique.

Il est connu que le rentrage consiste en un procédé de remettage des fils d'ourdissage à travers les lamelles, les lisses et le peigne de tissage. Il est aussi connu que, pour permettre le remettage des fils, rentrés à travers les lamelles et les lisses, entre les dents du peigne, il est nécessaire introduire entre ces-ci une passette en séquence prédéterminée. Dans un tel but, le peigne doit être opportunement mouvementé longitudinalement à intermittence, de manière que l'axe de la passette soit centré entre les deux dents interessées au fur et à mesure par le rentrage. Pour obtenir le mouvement du peigne et l'écartement des ses dents, des procédés opérationels differents sont connus.

Une technique connue consiste essentiellement dans l'insertion d'un coin entre les dents du peigne à rentrer de manière à les ecarter suffisament pour faciliter l'introduction de la passette. A la fin de chaque introduction, le coin se déplace latéralement, en exerçant une poussée sur le côté des dents entre lesquelles a été précédemment inseré, da manière à provoquer l'avancement du peigne d'un pas correspondant à la distance axiale entre dent et dent ou "réductions". En suite, le coin est extrait par le peigne et par la suite remis dans la position initiale pour permettre la répétition programmée de l'opération décrite. La position initiale du coin est réglée en relation à la serre spécifique du peigne, la serre du peigne étant définie comme le nombre des dents par unité de longueur du peigne même.

Est aussi connue une technique qui consiste essentiellement dans l'introduction entre les dents du peigne d'une vis sans fin laquelle, en tournant, provoque l'écartement des deux dents entre lesquelles est inserée et au même temps, l'avancement du peigne.

Est aussi connue la réalisation du mouvement axial du peigne au moyen d'un électro-aimant agissant sur la surface extérieure d'une plaque métallique fixée à une poutre à la base du peigne, de manière à en provoquer, en séquence programmée, le blocage dans une position prédétermniée et la translation longitudinale pour une longueure correspondante à la serre du peigne. Un encoder est utilisé pour relever le déplacement du peigne et pour transmettre la valeur dudit déplacement à un ordinateur électronique opportunement programmé pour permettre la comparaison avec une valeur de référence prédéterminée et correspondante à la serre du peigne. L'ordinateur commande la rotation d'un moteur pas-à-pas rélié à des moyens de support de l'électro-aimant pour permettre la translation contrôlée.

Mais l'expérience a démontrée que les techniques surmentionnées peuvent être appliquées seulement aux système à peigne simple ou double mais du type à basse réduction, et resultent inapplicables au cas des systèmes à peigne double à haute réduction, puisque les dents respectives ne sont jamais parfaitement verticales et que le pas entre les dents des deux peignes n'est jamais exactement constant.

En outre, il est connu que pour permettre le tissage avec des fibres vegetales et synthetiques avec un'épaisseur réduite l'emploi de peignes doubles est de plus en plus requis, lesquels comprennent plusieurs dents ou lamelles alignées sur deux files parallèles et horizontalement décalées d'une distance correspondante à la moitié du pas du peigne, le pas du peigne étant définis comme la distance entre deux dents adjacentes d'une même file.

Le brevet US 5136762 décrit un procédé de rentrage automatique et une machine pour réaliser ledit procédé et, dans le détail, les phases en général prévues en amont et en aval du remettage des fils à travers les dents du peigne.

Le but principal de la présente invention est celui de permettre le remettage automatique dans un peigne double, spécialement à haute réduction.

A ce résult on est parvenus conformément à l'invention en adoptant l'idée de réaliser un procédé et un dispositif ayants les caractéristiques décrites dans la partie caractérisante des revendications 1 et 3.

Les avantages qui dérivent de la présente invention consistent essentiellement en ce qu'il est possible obtenir le positionnement correct et l'écartement des dents pour le remettege des fils dans un peigne double avec une seule passette et sans cumul d'erreurs; qu'il est possible réaliser le contrôle automatique de la position instantanée du peigne, c'est-à-dire des dents respectives, de manière à obtenir une précisition opérationnelle considerable; qu'un dispositif conformément à l'invention est de fabrication simple, économique et fiable même après un temps prolongé d'utilisation.

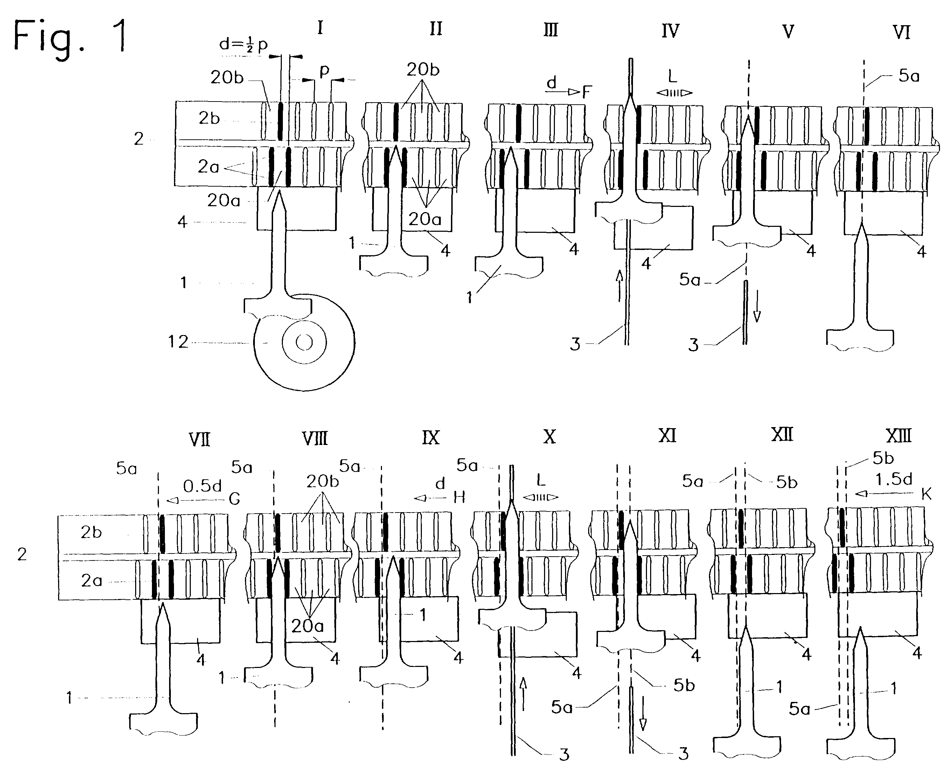

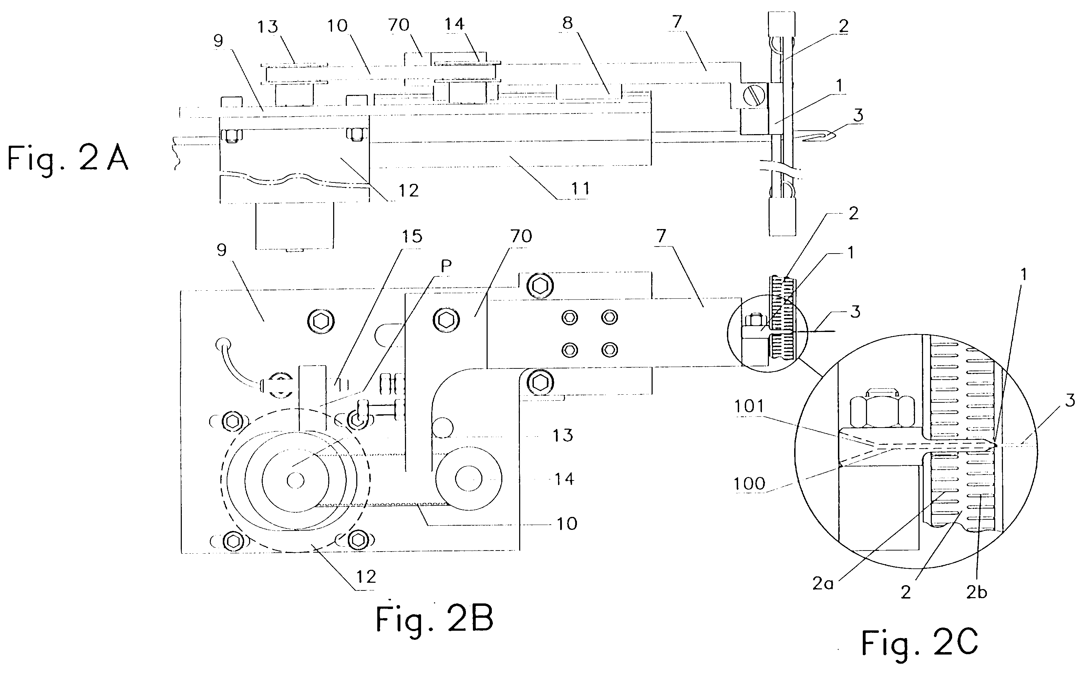

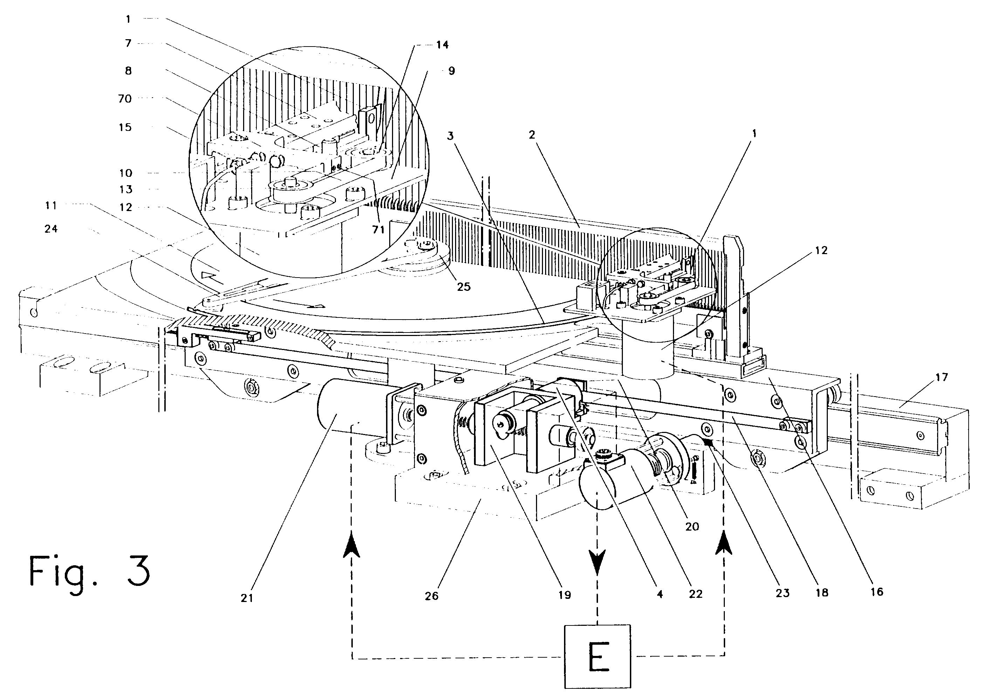

Ces avantages et caractéristiques de l'invention ainsi que d'autres seront plus et mieux compris de chaque homme du métier à la lumière de la description qui va suivre et à l'aide des dessins annexés donnés à titre d'exemple pratique d'une forme concrète de réalisation, mais à ne pas considérer dans le sens limitatif, sur lesquels: la Fig. 1 représente un schéma des phases opérationnelles d'un procédé conformément à l'invention; la Fig. 2A représente une vue latérale de moyens pour réaliser le procédé de Fig. 1; la. Fig. 2B représente une vue en plan des moyens de la Fig. 2A; la Fig. 2C représente un détail agrandi des moyens de Fig. 2B; la Fig. 3 représente une vue en perspective des moyens des Fig. 2A, 2B et 2C et des organes de support et contrôle respectifs.

Réduit à sa structure essentielle et en référence aux figures des dessins annexés, un procédé pour le remettage des fils à travers les dents d'un peigne double (2) avec une pluralité de lamelles ou dents (2a, 2b) alignées et disposées sur deux files parallèles et horizontalement décalées entre elles d'une distance (d) correspondante à la moitié du pas (p) du peigne dans une machine de rentrage, conformément à l'invention, comprend les phases opérationnelles suivantes:
phase I: avec le peigne double (2) fixe, disposer un index plat (1) placé face au creux (20a) délimité par une paire de dents prédéterminées (2a) adjacentes de la première file, celle proximale, de manière que l'extrémité antérieure de l'index (1) soit opposée à une dent (2b) correspondante de la deuxième file, celle distale;
phase II: avancer ledit index (1) et l'introduire à fond dans ledit creux;
phase III: avec l'index (1) fixe, mouvementer le peigne (2) selon la direction de l'axe longitudinal respectif (vers la droite dans la figure 1, comme indiqué par la fleche F), pour un trait de longueur (d) correspondante à la moitié du pas (p) du peigne (2), de manière à découvrir la lumière du creux (20b) délimité par la paire de dents (2b) correspondantes de ladite deuxième file du peigne (2);
phase IV: avancer ulterieurement ledit index (1) et l'introduire à fond dans le creux (20b) de ladite deuxième file du peigne (2), après introduire une passette (3) entre les creux (20a, 20b) ainsi engagés par ledit index (1) et libérer le peigne (2) de manière que, par effet de l'élasticité propre des dents (2a, 2b) des deux files, le creux (20b) de ladite deuxième file spontanément se place en position centrée par rapport à l'axe longitudinal de l'index (1);
phase V: bloquer le peigne (2) avec le creux (20b) ainsi centré et retirer la passette avec le fil d'ourdissage à travers les deux files de dents (2a, 2b) du peigne (2);
phase VI: retirer du peigne (2) l'index (1) jusqu'à extraction complète du même;
phase VII: mouvementer le peigne (2) selon la direction de l'axe longitudinal respectif avec sens opposé au précedent (vers la gauche dans la figure, comme indiqué par la fleche G) pour un trait de longueur presque égale à un quart (0.5d) du pas (p) du peigne (2), de manière à le ramener dans la position de départ respective, c'est-à-dire dans la position correspondante à la première phase (I);
phase VIII: avancer ledit index (1) et l'introduire à fond dans le creux (20a) de ladite première file de dents (2a);
phase IX: avec l'index (1) fixe, mouvementer le peigne (2) selon la direction de l'axe longitudinal respectif dans la même direction du mouvement précedent (vers la gauche dans la figure, comme indiqué par la fleche H) pour un trait de longueur (d) correspondante à la moitié du pas (p) du peigne (2);
phase X: avancer ultérieurement ledit index (1) et l'introduire à fond dans le creux (20b) de ladite deuxième file du peigne (2), introduire donc une passette (3) entre les creux (20a,20b) ainsi engagés par ledit index (1) et libérer le peigne (2) de manière que, par effet de l'élasticité propre des dents (2a, 2b) des deux files, le creux (20b) de ladite deuxième file spontanement se place en position centré par rapport à l'axe longitudinal de l'index (1);
phase XI: bloquer le peigne (2) avec le creux (20b) ainsi centré et retirer la passette avec un autre fil d'ourdissage (5b) qui a été prélevé par celle-ci en réalisant le remettage à travers les deux files de dents (2a, 2b) du peigne (2);
phase XII: retirer du peigne (2) l'index (1) jusqu'à l'extraction complète du même;
phase XIII: mouvementer le peigne (2) selon la direction de l'axe longitudinal respectif dans le même sens du mouvement précédent (vers la gauche dans la figure, comme indiqué par la fleche K) pour un trait de longueur 1.5d correspondante aux trois quart dudit pas (p), de manière à disposer le peigne (2) en position de remettage d'un autre fil et ainsi rétablir les conditions de début du cycle. Dans la Fig. 1 la double fleche L indique le déplacement du peigne (2) à la suite de sa libération et et par effet de l'élasticité propre de ses dents (2a, 2b).

Dans lesdites phases II et VIII l'index (1) est avantageusement introduit à fond dans le creux (20a) de ladite première file de dents (2a) du peigne (2) sans aucun contact avec les dents de la deuxième file (2b).

La méthodologie opérationnelle décrite permet d'opérer sur une seule file de dents à la fois.

Pour ce qu'il concerne le dispositif pour réaliser le surmentioné procédé, ce-ci comprend, en combinaison:
- un index (1) fixé à un chariot de support (7) correspondant de manière à resulter tourné vers les deux files (2a,2b) d'un peigne double (2) et orthogonal à l'axe de celui-ci: ledit chariot (7) étant à son tour monté sur une glissière lineaire (8) pour permettre le mouvement longitudinal de l'index (1) de et vers le peigne (2);
- une plaque horizontale (9) à laquelle est fixée la glissière dudit chariot (7): ladite plaque (9) étant à son tour fixée à une plate-forme horizontale (11) qui agit aussi d'élément de guide et de support pour une passette (3):
- un moteur pas-à-pas (12) pour le mouvement dudit index (1), lequel est supporté par ladite plaque (9) et est rélié aux chariot (7) de l'index (1) au moyen d'une courroie (10) fermée en anneau sur deux poulies (13,14) une (13) desquelles est calée sur l'arbre du moteur (12) et l'autre (14) est montée folle sur le précité chariot (7): ladite courroie (10) étant réliée au chariot (7) de l'index (1) au moyen d'un appendice en forme d'équerre (70) du même. A titre d'exemple non limitatif, comme illustré dans la Fig. 3 des dessins annexés, l'appendice (70) dudit chariot (7) peut être rélié à la courroie (10) avec des moyens de fixation à vis (71) à axe orthogonal à une gorge de l'appendice (70) même, dans laquelle une portion de la courroie (10) est passante.

Avantageusement, conformément à l'invention et en référence à la Fig. 2C des dessins annexés, ledit index (1) est pourvu d'un canal longitudinal (100) dont la portion d'entrée (101) est convergente vers la sortie, de manière à délimiter une correspondante voie d'amorce et de guide pour la passette (3) en phase d'introduction de la même à travers les dents (2a,2b) du peigne (2).

En outre des moyens de contrôle de la position de l'index (1), sont avantageusement prevus, avec un encoder - pour simplification ne pas représenté dans les dessins annexés - associé audit moteur pas-à-pas (28) et avec un capteur (15), par exemple du type inductif, prévu dans une position fixe et prédéterminée de la plaque (9) à l'arrière du chariot (7) de support de l'index (1). S'il y a verifie la perte d'un ou plusieurs pas de la part du moteur (12), par exemple à la suite d'un choc accidentel de l'index (1) contre une quelconque partie du peigne (2) ou pour autre cause, ledit encoder commande l'arrêt de la machine et le recul du chariot (7) jusqu'au point de frappe (P) en proximité du capteur (15) de manière que celui-ci puisse relever le recul du chariot (7) jusqu'au pointe de frappe (P) , ce qui correspond au rétablissement de la condition de début de cycle correcte.

Des moyens de support et mouvement du peigne (2) et de la passette (3), sont en outre prevus , en soi déjà connus, lesquels comprennent:
- une base (16) de support du peigne (2), laquelle est montée glissante sur un élément de guidage (17) fixe, rectiligne et parallèle au peigne (2) pour en permettre le glissement selon la direction longitudinale respective: à ladite base (16) étant fixé longitudinalement en bosse un élément rubané (18) en acier;
- un électro-aimant (4) avec la surface active parallèle audit ruban (18) et destinée à agir sur celui-ci, ledit électro-aimant (4) étant supporté par un corps (19) asservi à un mouvement de traslation intermittent selon une direction parallèle au peigne (2) et au quel est fixée une platine (20) qui est placée du côté opposé à sa surface active par rapport au ruban (18) de manière que le ruban (18) soit interposé entre l'électro-aimant (4) et la platine (20);
- un moteur pas-à-pas (21) supporté par une structure fixe (26) de support de l'électro-aimant (4);
- un encoder (22) avec un galet tâteur correspondant (23) pour contrôler les déplacements du peigne (2) à commande dudit moteur (21);
- des moyens pour le mouvement de la passette (3) avec un bras de commande (24) fixé à un' extrémité de la même et asservi à un organe moteur (25) pour permettre le mouvement de et vers ledit peigne (2) : ledit organe moteur (25) étant supporté par ladite plateforme (11) .

Pour mantenir le peigne (2) bloqué en position fixe pendant les phases I, II, V, VI et XI dudit procédé l'électro-aimant (4) est activé agissant sur le ruban (23) fixé à la base du peigne, dans la condition de moteur (21) arrêté. Pour libérer le peigne (2) et en permettre l'oscillation élastique libre pendant lesdites phases IV et X, durant lesquelles le moteur (21) est arrêté, l'électro-aimant (4) est désactivé. Pour mouvementer le peigne (2), est activé l'électro-aimant (4) et est actionné le moteur (21).

Lesdits organes moteurs (112), (21) et (25), comme ainsi les encoders de contrôle respectifs, ledit eléctro-aimant (4) et ledit capteur (15) sont asservis à un ordinateur électronique (E) qui peut être programmé, pour leur gestion coordonnée selon un programme enregistré dans une memoire de l'ordinateur (E), conformément à une procédure déjà connue en soi aux hommes du métier, et donc ne pas décrite en détail.

## Revendications

1. Procédé pour le remettage des fils à travers les dents d'un peigne double (2) comprenant une pluralité de lamelles ou dents (2a, 2b) alignées et disposées sur deux files parallèles et horizontalement décalées entre elles d'une distance (d) correspondante à la moitié du pas (p) du peigne dans une machine de rentrage comprenant les phases opérationnelles suivantes:
**(a)**: avec le peigne double (2) fixe, disposer un index plat (1) placé face au creux (20a) délimité par une paire de dents prédéterminées (2a) adjacentes de la première file, celle en proximité, de manière que l'extrémité antérieure de l'index (1) soit opposée à une dent (2b) correspondante de la deuxième file, celle distale;
**(b)**: avancer ledit index (1) et l'introduire à fond dans ledit creux;
**(c)**: avec l'index (1) fixe, mouvementer le peigne (2) selon la direction de l'axe longitudinal respectif (vers la droite dans la figure 1, comme indiqué par la fleche F), pour un trait de longueur (d) correspondante à la moitié du pas (p) du peigne (2), de manière à découvrir la lumière du creux (20b) délimité par la paire de dents (2b) correspondantes de ladite deuxième file du peigne (2);
**(d)** : avancer ulterieurement ledit index (1) et l'introduire à fond dans le creux (20b) de ladite deuxième file du peigne (2), après introduire une passette (3) entre les creux (20a, 20b) ainsi engagés par ledit index (1) et libérer le peigne (2) de manière que, par effet de l'élasticité propre des dents (2a, 2b) des deux files, le creux (20b) de ladite deuxième file spontanément se place en position centrée par rapport à l'axe longitudinal de l'index (1);
**(e)** : bloquer le peigne (2) avec le creux (20b) ainsi centré et retirer la passette avec le fil d'ourdissage à travers les deux files de dents (2a, 2b) du peigne (2);
**(f)** : retirer du peigne (2) l'index (1) jusqu'à extraction complète du même;
**(g)**: mouvementer le peigne (2) selon la direction de l'axe longitudinal respectif avec sens opposé au précedent (vers la gauche dans la figure 1, comme indiqué par la fleche G) pour un trait de longueur presque égale à un quart (0.5d) du pas (p) du peigne (2), de manière à le ramener dans la position de départ respective, c'est-à-dire dans la position correspondante à la première phase (I);
**(h)** : avancer ledit index (1) et l'introduire à fond dans le creux (20a) de ladite première file de dents (2a);
**(i):** avec l'index (1) fixe, mouvementer le peigne (2) selon la direction de l'axe longitudinal respectif dans la même direction du mouvement précédent (vers la gauche dans la figure 1, comme indiqué par la fleche H) pour un trait de longueur (d) correspondante à la moitié du pas (p) du peigne (2);
**(l)**: avancer ultérieurement ledit index (1) et l'introduire à fond dans le creux (20b) de ladite deuxième file du peigne (2), introduire donc une passette (3) entre les creux (20a,20b) ainsi engagés par ledit index (1) et libérer le peigne (2) de manière que, par effet de l'élasticité propre des dents (2a, 2b) des deux files, le creux (20b) de ladite deuxième file spontanement se place en position centré par rapport à l'axe longitudinal de l'index (1);
**(m)**: bloquer le peigne (2) avec le creux (20b) ainsi centré et retirer la passette avec un autre fil d'ourdissage (5b) qui a été prélevé par celle-ci en réalisant le remettage à travers les deux files de dents (2a, 2b) du peigne (2);
**(n)** : retirer du peigne (2) l'index (1) jusqu'à l'extraction complète du même;
**(o)** : mouvementer le peigne (2) selon la direction de l'axe longitudinal respectif dans le même sens du mouvement précédent (vers la gauche dans la figure 1, comme indiqué par la fleche K) pour un trait de longueur 1.5d correspondante aux trois quart dudit pas (p), de manière à disposer le peigne (2) en position de remettage d'un autre fil et ainsi rétablir les conditions de début de cycle.

2. Procédé selon la revendication 1 caractérisé en ce que dans lesdites phases (b) et (h) l'index (1) est introduit à fond dans le creux (20a) de ladite première file de dents (2a) du peigne (2) sans aucun contact avec les dents (2b) de la deuxième file.

3. Dispositif pour le remettage des fils à travers les dents d'un peigne double (2) avec une pluralité de lamelles ou dents (2a, 2b) alignées et disposées sur deux files parallèles et horizontalement décalées entre elles d'une distance (d) correspondante à la moitié du pas (p) du peigne dans une machine de rentrage, comprenant des moyens pour le mouvement longitudinal dudit peigne (2) et pour le mouvement de ladite passette (3) , caractérisé en ce que le dispositif comprend, en combinaison:
- un index (1) fixé à un chariot de support correspondant (7) de manière à resulter tourné vers les deux files (2a,2b) d'un peigne double (2) et orthogonal à l'axe de celui-ci: ledit chariot (7) étant à son tour monté sur une glissière lineaire (8) pour permettre le mouvement longitudinal de l'index (1) de et vers le peigne (2);
- une plaque horizontale (9) à laquelle est fixée la glissière (8) dudit chariot (7): ladite plaque (9) étant à son tour fixée à une plate-forme horizontale (11) qui agit aussi d'élément de guide et support pour une passette (3) :
- un moteur pas-à-pas (12) pour le mouvement dudit index (1), lequel est supporté par ladite plaque (9) et est rélié aux chariot (7) de l'index (1) au moyen d'une courroie (10).

4. Dispositif selon la revendication 3 caractérisé en ce que ladite courroie (10) est fermée en anneau sur deux poulies (13,14) une (13) desquelles est calée sur l'arbre du moteur (12) et l'autre (14) est montée folle sur le précité chariot (7): ladite courroie (10) étant réliée au chariot (7) de l'index (1) au moyen d'un appendice en forme équerre (70) du même.

5. Dispositif selon les revendications 3 et 4 caractérisé en ce que l'appendice en forme d'équerre (70) dudit chariot (7) est réliable à la courroie (10) avec des moyens de fixation à vis (71) à axe orthogonal à une gorge de l'appendice (70) même à travers laquelle passe une portion de la courroie (10) .

6. Dispositif selon la revendication 3 caractérisé en ce que ledit index (1) est pourvu d'un canal longitudinal (100) dont la portion d'entrée (101) est convergente vers la sortie, de manière à délimiter une correspondante voie d'amorce et de guide pour la passette (3) en phase d'introduction de la même à travers les dents (2a,2b) du peigne (2).

7. Dispositif selon une ou plusieurs des revendications de 3 à 6 caractérisé en ce qu'il comprend des moyens de contrôle de la position de l'index (1), avec un encoder associé audit moteur pas-à-pas (28) et avec un capteur (15), par exemple du type inductif, prévus dans une position fixe et prédéterminée de la plaque (9) à l'arrière du chariot (7) de support de l'index (1).
